# EUROPEAN PATENT APPLICATION

(11) **EP 4 768 817 A1**
(43) Date of publication of application: **01.07.2026**
(21) Application number: 25226637.4
(22) Date of filing: 22.12.2025
(51) Int. Cl.: F24H 3/06, F24H 9/1881, F24H 9/00, B60H 1/22

(54) **PARKING HEATER**

(30) Priority: 24.12.2024 CN 202423236007 U
(71) Applicant: Shenzhen Yisi Technology Co., Ltd., Shenzhen, Guangdong 518000 (CN)
(72) Inventor: XIN, Weifeng, Shenzhen, 518000 (CN)
(74) Representative: JD&P Patent Attorneys Joanna Dargiewicz & Partners

(57) **Abstract**

A parking heater includes a housing (10) with an air inlet (11) and an air outlet (12), a combustion chamber (20) arranged in the housing (10) and a heat-exchange member (30). The combustion chamber (20) includes an open end (21) and a closed end (22). The open end (21) faces the air outlet (12) and includes a high side (211) and a low side (212), an end surface of the open end (21) is a sloping surface, and a combustion portion (221) is arranged at the closed end (22). The heat-exchange member (30) is configured as a hollow structure and arranged between the housing (10) and the combustion chamber (20). A gas inlet (31) and a gas outlet (32) are formed in a side wall of the heat-exchange member (30), the gas inlet (31) communicates with the combustion portion (221), and the gas outlet (32) is located a side of the heat-exchange member (30) adjacent to the high side of the open end (21), which allows high-temperature gas to uniformly contact the heat-exchange member (30), and the effective contact area between the high-temperature gas and the heat-exchange member (30) is greatly increased, thus increasing the heat utilization rate and improving the heating performance of the parking heater.

## Description

### FIELD

The disclosure belongs to the technical field of heaters, and relates to a parking heater.

### BACKGROUND

With the continuous development of the automotive technology and the increasing requirement for the comfort of vehicles, parking heaters are applied more and more widely in the automotive industry. The parking heater can provide heat during parking of a vehicle to effectively improve the driving environment in cold weather, and can also be used to preheat the engine to improve the starting performance of the engine and reduce abrasion.

Existing parking heaters typically adopt a conventional combustion chamber design, which keeps the height of the end surface of a combustion chamber constant. During operation, air is introduced into the combustion chamber and fully mixed with fuel to undergo a combustion reaction. In this process, a large amount of high-temperature gas is produced, and the high-temperature gas is then discharged from a gas outlet and exchanges heat with a heat exchanger on the flow path, thereby allowing the heat exchanger to absorb heat and heat external air or other media. However, such a conventional design shows significant defects in practical application. Due to the constant height of the end surface of the combustion chamber, the high-temperature gas produced by combustion exhibits an obvious non-uniformity when flowing to the gas outlet due to factors such as gas flow characteristics and the pressure distribution law. Specifically, most of the high-temperature gas tends to flow out from the side close to the gas outlet, resulting in a large difference in the flow of high-temperature gas received by the two sides, close to and away from the gas outlet, of the heat exchanger, which in turn causes a serious imbalance in the temperature of the two sides of the heat exchanger.

In view of this, there is a need to provide an improved parking heater to solve the aforesaid technical problem.

### SUMMARY

In order to solve the above problem, the present invention provides a parking heater which comprises a housing comprising an air inlet and an air outlet; a combustion chamber arranged in the housing, wherein the combustion chamber comprises an open end and a closed end, the open end faces the air outlet and comprises a high side and a low side, and a combustion portion is arranged at the closed end; and a heat-exchange member, wherein the heat-exchange member is configured as a hollow structure and arranged between the housing and the combustion chamber, a gas inlet and a gas outlet are formed in a side wall of the heat-exchange member, the gas inlet is in communication with the combustion portion, and the gas outlet is located at a side of the heat-exchange member adjacent to the high side of the open end.

In some embodiments, the heat-exchange member comprises a first cavity and a second cavity, the first cavity is in communication with the gas outlet, the second cavity is in communication with the gas inlet, a partition is arranged between the first cavity and the second cavity, and the partition is disposed around the combustion portion.

In some embodiments, the heat-exchange member is call as a primary heat-exchange member, and the parking heater further comprises a secondary heat-exchange member which is fixedly connected to the primary heat-exchange member; a heat-exchange groove is arranged at a periphery of a bottom of the secondary heat-exchange member, and the heat-exchange groove surrounds a middle portion of the bottom of the secondary heat-exchange member; a heat-exchange channel is formed in the side wall of the heat-exchange member in an axial direction of the housing, and the heat-exchange channel comprises a first heat-exchange channel and a second heat-exchange channel adjacent to the first heat-exchange channel; and the first cavity communicates with the heat-exchange groove by means of the first heat-exchange channel, and the heat-exchange groove communicates with the gas outlet by means of the second heat-exchange channel.

In some embodiments, a first impeller is arranged at a bottom wall of the second cavity, and the first impeller comprises a first air suction portion and a first air discharge portion in communication with the first air suction portion; an annular groove is formed in the bottom wall of the second cavity and communicate the gas inlet and the first air suction portion; and the annular groove is arranged at a side of the bottom wall facing the first air suction portion.

In some embodiments, an air tube is disposed around a bottom end of the combustion portion, a fuel tank is arranged between the air tube and the combustion portion, and a fuel inlet tube is connected to the fuel tank. The air tube comprises an air inlet end adjacent to the first air discharge portion and an air outlet end extending into an interior of the combustion portion. A stop plate is arranged at a bottom of the air inlet end, connecting plates are arranged on the stop plate and extend in a radial direction of the air tube, and channels are formed between adjacent connecting plates, the channels communicate the first air discharge portion and the air inlet end of the air tube.

In some embodiments, the parking heater further comprises a motor arranged close to the air inlet. The motor comprises a first output shaft and a second output shaft which are arranged coaxially, and the first output shaft is connected to a first impeller.

In some embodiments, the parking heater further comprises a second impeller, wherein the second impeller is connected to the second output shaft; and the second impeller comprises a second air suction portion and a second air discharge portion in communication with the second air suction portion, and the second air suction portion faces the air inlet.

In some embodiments, heat-absorption ribs or fins are arranged outside the primary heat-exchange member and the secondary heat-exchange member, and the heat-absorption ribs or fins outside the heat-exchange member extend into the first cavity.

In some embodiments, an ignition device is arranged outside the combustion portion, and the ignition device comprises a heating bar which extends into a fuel tank.

In some embodiments, a mounting plate is arranged on an outer wall of the housing, and the mounting plate is fixedly connected to the heat-exchange member; and the gas inlet, the gas outlet and a fuel inlet tube extend through the mounting plate to be exposed outside the housing.

In some embodiments, an end surface of the open end is a sloping surface, such as a straight sloping surface, a concaved sloping surface or a convex sloping surface.

In some embodiments, the stop plate faces the first air discharge portion with a gap formed therebetween to allow the air discharged from the first air discharge portion to flow to the channels after passing through the gap.

In some embodiments, the housing further comprises a path formed between an outer surface of the heat-exchange member and an inner surface of the housing, the path is in communication with the air inlet and the air out, and the first cavity and the second cavity are isolated from the path.

In some embodiments, the secondary heat-exchange member is arranged between the primary heat-exchange member and the air outlet of the housing in an axial direction of the housing.

In some embodiments, the housing has a height direction extending from the air inlet to the air outlet, and the combustion chamber has a height which decreases gradually in a transverse direction away from the gas outlet, the transverse direction being perpendicular to the height direction. That is, in the transverse direction, the farther away from the gas outlet, the smaller the combustion chamber height becomes. In some embodiments, the height direction is the axial direction of the housing.

Compared with the prior art, the parking heater provided by the present invention has the following technical effects: the open end of the combustion chamber includes the high side and the low side which are different in height, to allow high-temperature gas to uniformly contact the heat-exchange member, and compared with a traditional combustion chamber with a constant height, the effective contact area between the high-temperature gas and the heat-exchange member is greatly enlarged to realize more sufficient heat-exchange, and more heat is transferred from the high-temperature gas to the heat-exchange member and then to cold air entering into the housing, thus increasing the heat utilization rate and reducing energy waste; more heat is output under the same energy consumption, thus improving the heating performance of the parking heater. Since the high-temperature gas uniformly enters the heat-exchange member and sufficiently exchanges heat with the heat-exchange member, hot air flowing out from the air outlet of the housing after heat-exchange is more uniform in temperature distribution, and a local temperature non-uniformity of the hot air blowing out from the air outlet is avoided, thus improving the usage experience; and the uniform heat-exchange process allows for more stable temperature fields in the combustion chamber and the heat-exchange member, thus avoiding adverse effects of local overheat or temperature fluctuations on equipment parts.

### BRIEF DESCRIPTION OF THE DRAWINGS

To more clearly explain the technical solutions in the embodiments of the disclosure or the prior art, drawings used for describing the embodiments of the disclosure or the prior art are briefly introduced below. Obviously, the drawings described below merely illustrate some embodiments rather than all possible embodiments of the disclosure. All other drawings obtained by those ordinarily skilled in the art according to the following ones without creative labor should also fall within the protection scope of the disclosure.
FIG. 1 is a stereogram of a parking heater according to one embodiment of the disclosure.
FIG. 2 is an exploded view of the parking heater according to one embodiment of the disclosure.
FIG. 3 is a sectional view along A-A in FIG. 1.
FIG. 4 is a stereogram of a secondary heat-exchange member according to one embodiment of the disclosure.
FIG. 5 illustrates the heat-exchange member of the parking heat of FIG. 1.
FIG. 6 illustrates the combustion chamber of the parking heat of FIG. 1, viewed from another aspect.

Wherein: 10, housing; 11, air inlet; 12, air outlet; 13, mounting plate;
20, combustion chamber; 21, open end; 211, high side; 212, low side; 22, closed end; 221, combustion portion; 2211, ignition device; 222, air tube; 2221, air inlet end; 2222, air outlet end; 2223, stop plate; 2224, connecting plate; 2225, channel; 223, fuel tank; 2231, fuel inlet tube;
30, heat-exchange member; 31, gas inlet; 32, gas outlet; 33, first cavity; 34, second cavity; 341, first impeller; 3441, first air suction portion; 3412, first air discharge portion; 342, annular groove; 35, partition; 36, heat-exchange channel; 361, first heat-exchange channel; 362, second heat-exchange channel; 37, heat-absorption rib;
40, secondary heat-exchange member; 41, heat-exchange groove;
50, motor; 51, first output shaft; 52, second output shaft; 53, second impeller; 531, second air suction portion; 532, second air discharge portion.

### DESCRIPTION OF THE EMBODIMENTS

To better clarify the purposes, technical solutions and advantages of the disclosure, the disclosure is described in further detail below in conjunction with accompanying drawings and specific embodiments. It should be understood that the specific embodiments described here are merely used for explaining the disclosure rather than limiting the disclosure.

For the sake of a comprehensive and complete narration of the contents of the disclosure, the implementations and specific embodiments of the disclosure are illustratively described below, but these implementations and specific embodiments are not unique forms for implementing or applying the disclosure. Features of multiple specific embodiments, steps of a method for constructing and operating the specific embodiments and sequences of the steps are involved in the implementations. However, identical or equivalent functions, steps and sequences of the steps may be achieved by means of other specific embodiments. All other embodiments obtained by those ordinarily skilled in the art based on the following ones without creative labor should also fall within the protection scope of the disclosure.

It should be noted that when one element is referred to as being "fixed to" or "arranged on" the other element, it may be fixed to the other element directly or by means of an intermediate element. When one element is referred to as being "connected to" the other element, it may be connected to the other element directly or by means of an intermediate element.

It should be understood that terms such as "first" and "second" in the description, claims and drawings of the disclosure are used for distinguishing similar objects rather than describing specific sequences or precedence orders. The terms used here should be construed as inter-changeable in appropriate circumstances to allow the embodiments of the disclosure to be implemented in other sequences different from those illustrated or described here.

In the description of the disclosure, terms such as "front", "back", "top", "inner" and "outer" are used to indicate directional or positional relations based on the accompanying drawings merely for the purpose of facilitating and simplifying the description of the invention, do not indicate or imply that devices or elements referred to must be in a specific direction or be configured and operated in a specific direction, and thus should not be construed as limitations of the disclosure.

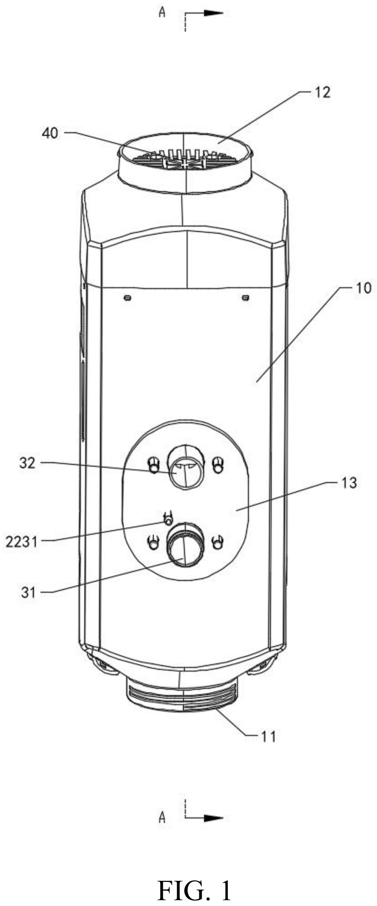

Referring to FIGS. 1-4, one embodiment of the disclosure provides a parking heater to solve the problem of a serious imbalance in the temperature of two sides of a heat exchanger caused by a great difference in the flow of high-temperature gas received by the two sides, close to and away from the gas outlet, of the heat exchanger in the parking heater in the prior art.

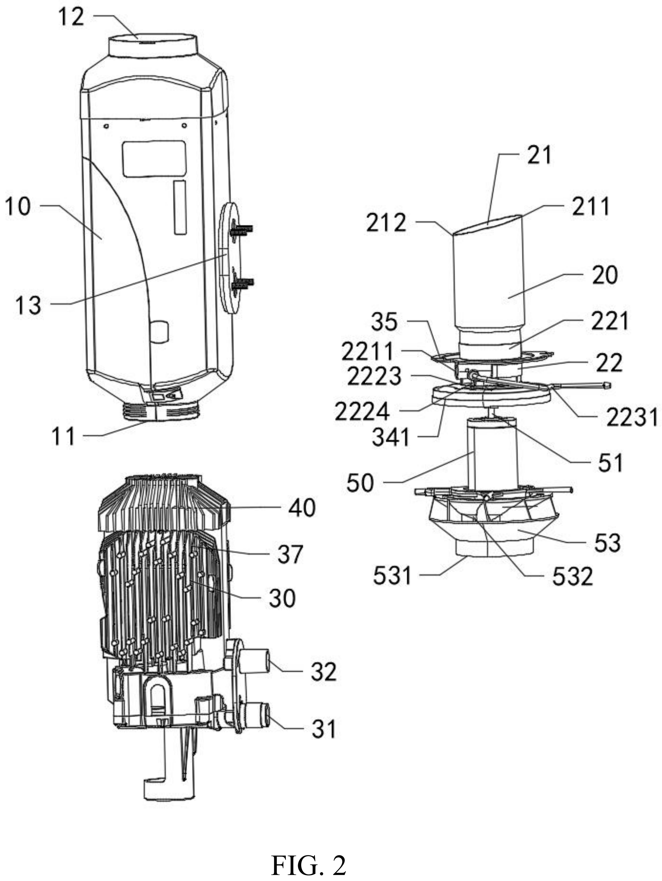

Specifically, referring to FIG. 1 which is a stereogram of a parking heater according to one embodiment of the disclosure and FIG. 2 which is an exploded view of the parking heater according to one embodiment of the invention, the parking heater includes a housing 10, a combustion chamber 20 and a heat-exchange member 30. Specifically, the combustion chamber 20 is surrounded by the heat-exchange member 30. An air inlet 11 and an air outlet 12 are formed in the housing 10, external air enters the parking heater via the air inlet 11 in the housing 10, and the air is heated by the parking heater and then flows out via the air outlet 12 in the housing 10. The combustion chamber 20 is arranged in the housing 10 and includes an open end 21 and a closed end 22. The open end 21 is oriented toward the air outlet 12 and includes a high side 211 and a low side 212, an end surface of the open end 21 is a sloping surface, and a combustion portion 221 is arranged at the closed end 22; and the heat-exchange member 30 is configured as a hollow structure and arranged between the housing 10 and the combustion chamber 20, a gas inlet 31 and a gas outlet 32 are formed in a side wall of the heat-exchange member 30, the gas inlet 31 communicates with the combustion portion 221, and the gas outlet 32 is located at a side of the heat-exchange member adjacent to the high side 211 of the open end 21 and away from the low side 212. The high side 211 of the open end 21 is closer to the gas outlet 32 than the low side 212. The end surface of the open end 21 of the combustion chamber 20 is a sloping surface and includes the high side 211 and the low side 212, the gas outlet 32 is formed in the high side 211 of the open end 21, and a natural flow path of high-temperature gas is changed by such a unique structure; after the high-temperature gas is produced by mixed combustion of fuel and air in the combustion chamber 20, the high-temperature gas more easily spreads and flows from the low side 212 to the high side 211 based on the characteristic of naturally flowing upwards and towards a lower pressure of hot air and a height difference between the ends of the combustion chamber 20, that is, the high-temperature gas flows orderly towards the gas outlet 32. In addition, the housing 10 defines a height direction which extends from the air inlet 11 toward the air outlet 12. The height of the combustion chamber 20 decreases gradually in a transverse direction away from the gas outlet 32, the transverse direction being perpendicular to the height direction of the housing 10, such that the high-temperature gas in the whole combustion chamber 20 is converged to the gas outlet 32 more uniformly under the guidance of the height difference, and the situation where the high-temperature gas intensively and quickly flows out from a partial region is avoided, thus ensuring that the high-temperature gas enters the heat-exchange member 30 more uniformly. External air enters the parking heater via the air inlet 11 and then comes into contact with the wall surface of the heat-exchange member 30, and the heat-exchange member 30 exchanges heat with the cold air entering the heat-exchange member 30 by heat conduction by means of heat of the high-temperature gas flowing into the heat-exchange member 30 from the combustion chamber 20, such that the cold air is gradually heated to turn into hot air, and the hot air flows out via the air outlet 12 in the housing 10 to be provided for an environment to be heated, thus improving the heating efficiency of the parking heater.

According to the parking heater provided by this embodiment, the inequal-height design of the ends of the combustion chamber 20 allows for uniform contact between the high-temperature gas and the heat-exchange member 30, and compared with a traditional combustion chamber 20 with a constant height, the effective contact area between the high-temperature gas and the heat-exchange member 30 is greatly enlarged to realize more sufficient heat-exchange to ensure that more heat is transferred from the high-temperature gas to the heat-exchange member 30 and then to cold air, thus increasing the heat utilization rate and reducing energy waste; more heat is output under the same energy consumption, thus improving the heating performance of the parking heater; because the high-temperature gas uniformly enters the heat-exchange member 30 and sufficiently exchanges heat with the heat-exchange member 30, hot air flowing out after heat-exchange is more uniform in temperature distribution, and a local temperature non-uniformity of the hot air blowing out from the air outlet 12 is avoided, thus improving the usage experience; and the uniform heat-exchange process allows for more stable temperature fields in the combustion chamber 20 and the heat-exchange member 30, thus avoiding adverse effects of local overheat or temperature fluctuations on equipment parts.

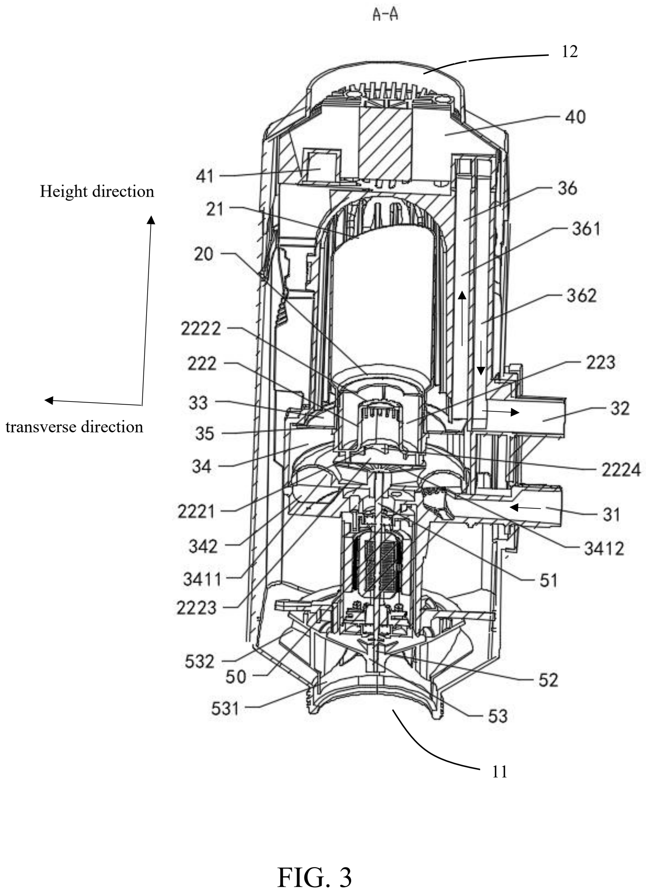

As a further improvement of the disclosure, referring to FIG. 3, the heat-exchange member 30 includes a first cavity 33 and a second cavity 34, the first cavity 33 communicates with the gas outlet 32, the second cavity 34 communicates with the gas inlet 31, and a partition 35 is arranged between the first cavity 33 and the second cavity 34 and disposed around the combustion portion 221. The heat-exchange member 30 includes the first cavity 33 and the second cavity 34, the first cavity 33 is isolated from the second cavity 34 by means of the partition 35, the partition 35 is disposed around the combustion portion 221, and the first cavity 33 directly communicates with the gas outlet 32, such that high-temperature gas produced by combustion of fuel in the combustion portion 221 passes through the sloping end surface of the open end 21 of the combustion chamber 20, then enters the first cavity 33, and finally is discharged from the gas outlet 32; and the second cavity 34 communicates with the gas inlet 31, such that external air enters the second cavity 34 via the gas inlet 31 and flows from the second cavity 34 into the combustion portion 221 to provide oxygen required for a combustion reaction. The first cavity 34 is isolated from the second cavity 34 by the partition 35, such that air entering the combustion portion 221 and discharged waste gas flow along independent and defined paths, and the waste gas is effectively prevented from entering air to be combusted to ensure that air entering the combustion portion 221 always has an appropriate oxygen content and purity to be sufficiently and stably mixed with fuel, thus greatly improving combustion efficiency, solving the problems of incomplete combustion and generation of harmful gas, and improving the working performance and environmental friendliness of the parking heater. The first cavity 33 communicates with the gas outlet 32, such that there are sufficient time and space for the high-temperature gas produced by combustion to exchange heat with the wall surface of the cavity when passing through the first cavity 33, thus facilitating heat recovery; the cavity structure with clear demarcation and reasonable connectivity enhances the overall stability of the parking heater, solves the problems of abnormal heating of components and pressure instabilities caused by disordered mixing and flowing of gas and lowers the risk of accidents caused by abnormal combustion and leakage of high-temperature gas, thus guaranteeing the safety of the parking heater in the operating process, prolonging the service life, and reducing maintenance and replacement costs.

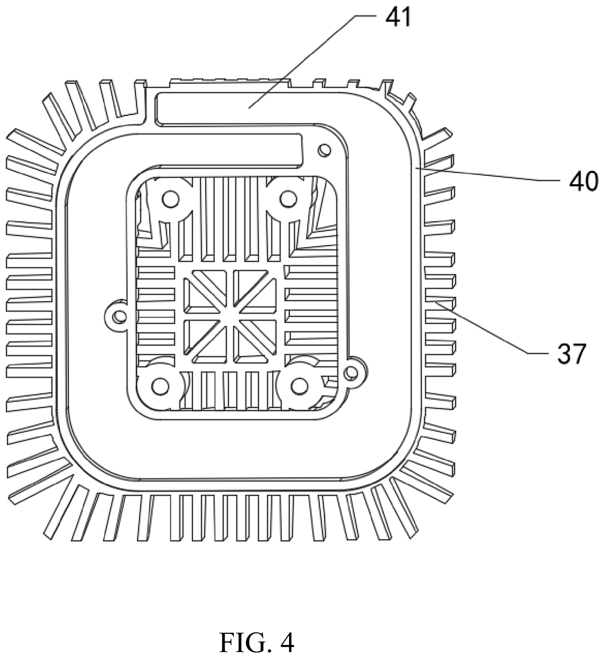

As a further improvement of the disclosure, referring to FIG. 4, the parking heater further includes a secondary heat-exchange member 40, and the secondary heat-exchange member 40 is fixedly connected to the heat-exchange member 30. A heat-exchange groove 41 is arranged at the bottom of the secondary heat-exchange member 40 and surrounds the edge of the bottom of the secondary heat-exchange member 40. A heat-exchange channel 36 is formed in the side wall of the heat-exchange member 30 in an axial direction and includes a first heat-exchange channel 361 and a second heat-exchange channel 362 adjacent to the first heat-exchange channel 361; and the first cavity 33 communicates with the heat-exchange groove 41 by means of the first heat-exchange channel 361, and the heat-exchange groove 41 communicates with the gas outlet 32 by means of the second heat-exchange channel 362. The secondary heat-exchange member 40 and the heat-exchange channel 36 matched with the secondary heat-exchange member 40 are arranged, and the heat-exchange groove 41 arranged at the bottom of the secondary heat-exchange member 40 surrounds the edge of the bottom of the secondary heat-exchange member 40, such that a specific space is provided for secondary heat-exchange of the high-temperature gas. The heat-exchange channel 36 is arranged on the side wall of the heat-exchange member 30 in the axial direction and consists of the first heat-exchange channel 361 and the second heat-exchange channel 362 adjacent to the first heat-exchange channel 361, and the first cavity 33 communicates with the heat-exchange groove 41 of the secondary heat-exchange member 40 by means of the first heat-exchange channel 361, such that the high-temperature gas, flowing out from the first cavity 33 after combustion, smoothly enters the heat-exchange groove 41; and the heat-exchange groove 41 communicates with the gas outlet 32 by means of the second heat-exchange channel 362, such that the high-temperature gas, after exchanging heat with the heat-exchange groove 41, flows to the gas outlet 32 along the second heat-exchange channel 362 to be discharged. The high-temperature gas produced by combustion in the combustion portion 221 first enters the first cavity 33 for primary heat-exchange to exchange heat with the inner wall of the first cavity 33, and at this moment, the temperature of the high-temperature gas is decreased, but the high-temperature gas still carries heat; then, the high-temperature gas flows into the heat-exchange groove 41 of the secondary heat-exchange member 40 through the first heat-exchange channel 361, and in the heat-exchange groove 41, the high-temperature gas exchanges heat again with the wall surface of the heat-exchange groove 41 to further release heat, such that the temperature of the gas is further decreased. After primary heat-exchange and secondary heat-exchange, the high-temperature gas with the temperature being further decreased flows to the gas outlet 32 through the second heat-exchange channel 362 to be discharged, such that the whole heat-exchange and gas-discharge process is completed. Compared with a traditional structure that implements heat-exchange only once, heat of the high-temperature gas is released and used more sufficiently, and more heat is transferred to air to be heated, thus increasing the heat utilization rate of the whole parking heater; and more heat is output under the same fuel consumption, thus improving the heating effect of the parking heater, and a warmer environment is provided for users.

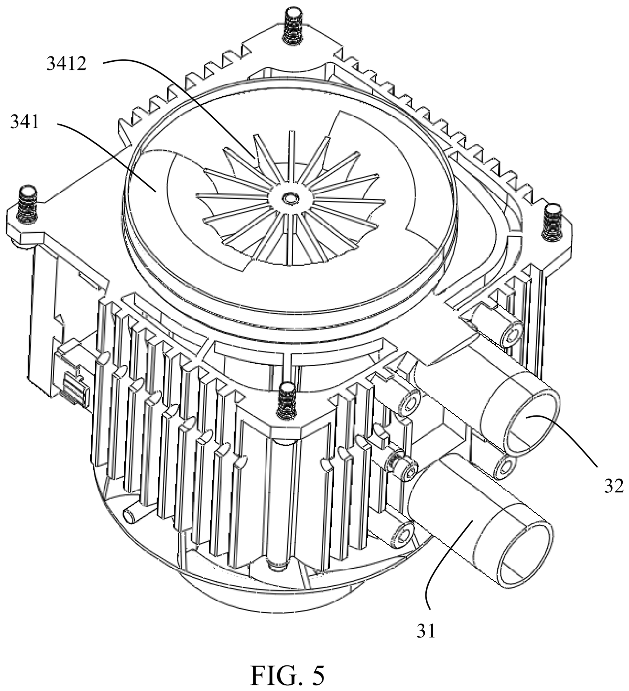

As a further improvement of the disclosure, referring to FIGS. 2-3 and 5, a first impeller 341 is arranged at a bottom end of the second cavity 34, the first impeller 341 includes a first air suction portion 3411 and a first air discharge portion 3412, and the first air suction portion 3411 communicates with the first air discharge portion 3412; and an annular groove 342 is formed in the bottom end of the second cavity 34, and the annular groove 342 is arranged opposite to the first air suction portion 3411 and communicates with the gas inlet 31 and the first air suction portion 3411. The first impeller 341 is arranged at the bottom end of the second cavity 34 and includes the first air suction portion 3411 and the first air discharge portion 3412, and the first air suction portion 3411 communicates with the first air discharge portion 3412 to form an air circulation channel. The annular groove 342 is formed in the bottom end of the second cavity 34, and the annular groove 342 is arranged opposite to the first air suction portion 3411 of the first impeller 342 and comminates with the gas inlet 31 and the first air suction portion 3411, such that air may flow along a specific path, and external air enters the annular groove 342 via the gas inlet 31, is then sucked from the annular groove 342 into the first air suction portion 3411 of the first impeller 341 under the effect of rotation of the first impeller 341, flows out from the first air discharge portion 3412 through a channel in the first impeller 341 and then flows to the combustion portion 221, thus providing air necessary for a combustion reaction. Air is sucked, rectified and transported in order by means of the first impeller 341 and is converged by the annular groove 342, such that the air enters the combustion portion 221 more uniformly and stably, the flow is controllable, and fuel and air are mixed in a more suitable proportion to allow for a more stable combustion reaction, thus greatly improving the combustion sufficiency and guaranteeing that the parking heater works stably and efficiently during long-term operation to continuously provide heat to the outside.

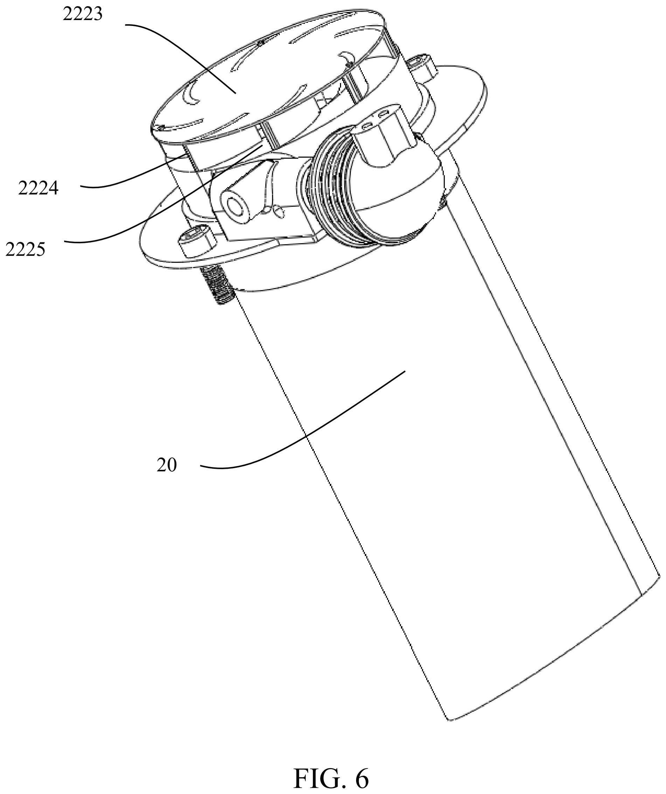

As a further improvement of the disclosure, referring to FIGS. 2-3 and 6, an air tube 222 is disposed around a bottom end of the combustion portion 221, a fuel tank 223 is arranged between the air tube 222 and the combustion portion 221, and a fuel inlet tube 2231 is connected to the fuel tank 223. The air tube 222 includes an air inlet end 2221 and an air outlet end 2222, the air inlet end 2221 is adjacent to and oriented toward the first air discharge portion 3412, and the air outlet end 2222 extends into the combustion chamber 221. A stop plate 2223 is arranged at the bottom of the air inlet end 2221, multiple connecting plates 2224 are arranged on a side of the stop plate 2223. Preferably, the connecting plates 2224 extend in a radial direction. Channels 2225 are formed between adjacent connecting plates 2224. The channels 2225 communicate the first air discharge portion 3412 and the air inlet end 2221 of the air tube 222. The air tube 222 is disposed around the bottom end of the combustion portion 221 to provide a critical channel for air transportation of a combustion system. The air tube 222 has the air inlet end 2221 and the air outlet end 2222, the fuel tank 223 is arranged between the air tube 222 and the combustion portion 221, the fuel tank 223 is connected to an external fuel supply system by means of the fuel inlet tube 2231 and configured to store and continuously supply fuel. The air inlet end 2221 of the air tube 222 is adjacent to and oriented toward the first air discharge portion 3412 of the first impeller 341 and is configured to receive air discharged from the first air discharge portion 3412, and the air outlet end 2222 of the air tube 222 extends into the interior of the combustion portion 221 to transport air into a core region of the combustion portion 221. The stop plate 2223 is arranged at the bottom of the air inlet end 2221 and faces the first air discharge portion 3412 with a gap formed therebetween to allow the air discharged from the first air discharge portion 3412 to flow to the channels 2225 after passing through the gap, the connecting plates 2224 are arranged on the side, opposite to the first air discharge portion 3412, of the stop plate 2223 and extend in the radial direction, and the channels 2225 communicate the air inlet end 2221 of the air tube 222 and the first air discharge portion 3412. The stop plate 2223 and the connecting plates 2224 function to rectify air before the air enters the air tube 2222. When the air is discharged from the first air discharge portion 3412 and flows towards the air inlet end 2221 of the air tube 222, the flow rate and direction of the airflow are non-uniform. The stop plate 2223 is capable of blocking part of the turbulent airflow, such that the air, after being rectified by the stop plate 2223, enters the air tube 222 more stably and orderly. On the one hand, the connecting plates 2224 stably connects the stop plate 2223 to the air inlet end 2221, such that the stop plate 2223 is unlikely to fall off or deflect when impacted by the airflow and functions normally; on the other hand, the connecting plates 2224 extending radially are able to disperse the impact force applied by the airflow to the stop plate 2223, such that the stop plate 2223 more stably bears the force applied by the airflow to maintain structural stability. In the actual working process, fuel is continuously supplied from the outside to the fuel tank 223 to be stored, at the same time, the first impeller 341 rotates to suck air from the annular groove 342, the air is then discharged from the first air discharge portion 3412 and flows to the air inlet end 2221 of the air tube 222 via the channels 2225. At the air inlet end 2221, the air is rectified by the stop plate 2223 and the connecting plates 2224 to be mor regular, then enters the air inlet end 2221 of the air tube 222 and flows to the air outlet end 2222 along a channel formed in the air tube 222. In this process, the air is mixed with the fuel in the fuel tank 223, and the mixture of the air and the fuel is ignited under the action of an ignition device 2211 to start a stable combustion process to continuously provide heat for the parking heater. The air and fuel preparation process before combustion is optimized by synergetic cooperation of the stop plate 2223, the connecting plates 2224 and the air tube 222 to ensure that the air and fuel entering the combustion portion 221 are mixed more uniformly and sufficiently and combusted more stably and efficiently, thus improving the overall heating performance of the parking heater.

As a further improvement of the disclosure, the parking heater further includes a motor 50, and the motor 50 is arranged close to the air inlet 11; the motor 50 includes a first output shaft 51 and a second output shaft 52 which are arranged coaxially, and the first output shaft 51 is connected to the first impeller 341. By arranging the motor 50 close to the air inlet 11, the motor 50 makes better use of the space in the vicinity of the air inlet 11 and better works together with related components. The motor 50 is provided with the first output shaft 51 and the second output shaft 52 which are arranged coaxially, and the double-shaft structural design ensures that the motor 60 is able to synchronously drive multiple components. The first output shaft 51 is connected to the first impeller 341, such that the motor 50, when rotating, directly transmits power to the first impeller 341 by means of the first output shaft 51 to drive the first impeller 341 to rotate. When the parking heater starts to operate, the first output shaft 51 rotates when the motor 50 is started, the first impeller 341 rotates synchronously with the first output shaft 51 and generates a low-pressure area by means of the first air suction portion 3411 in the rotating process, external air is sucked into the first impeller 341 via the annular groove 342 under the action of the pressure difference, then discharged via the first air discharge portion 3412 to enter the air tube 222 orderly, and finally supplied to the combustion portion 221 stably and continuously to ensure that fuel and air are fully mixed in the combustion process, thus realizing stable and efficient combustion to ensure enough heat production of the parking heater.

As a further improvement of the disclosure, the parking heater further includes a second impeller 53, and the second impeller 53 is connected to the second output shaft 52. The second impeller 53 includes a second air suction portion 531 and a second air discharge portion 532 which communicates with each other. The second air suction portion 531 faces the air inlet 11. Preferably, the second air suction portion 531 is coaxial with the air inlet 11. The second impeller 53 in the parking heater is connected to the second output shaft 52 of the motor 50 and rotates synchronously with the second output shaft 52 when the motor 50 is started to operate. The second air suction portion 531 of the second impeller 53 faces the air inlet 11, such that a low-pressure area will be formed in the vicinity of the second air suction portion 531 when the second impeller 351 rotates. Under the action of the external air pressure, air in the outside is continuously sucked into the second air suction portion 531 of the second impeller 53 via the air inlet 11 and then discharged from the second air discharge portion 532 through internal channels of the second impeller 351, and the air discharged from the second air discharge portion 532 flows to the path formed between the outer surface of the heat-exchange member 30 and the inner surface of the housing 10 for exchanging heat with the heat-exchange member 30. That is, the air discharged from the second air discharge portion 532 of the second impeller 351 becomes the air to be heated in the parking heater. Specifically, the air discharged from the second air discharge portion 532 of the second impeller 351 absorbs heat from the outer surface of the heat-exchange member 30 when passing through the path formed between the outer surface of the heat-exchange member 30 and the inner surface of the housing 10. The path is isolated from the first cavity 33 and the second cavity 34 of the heat-exchange member 30. The second impeller 53 actively sucks air from the air inlet 11, and compared with a natural air suction method, more stable and sufficient air to be heated is provided for the parking heater, the problem of an unsatisfactory heating effect caused by the lack of air is avoided, and the heating performance and reliability of the parking heater are improved.

As a further improvement of the disclosure, heat-absorption ribs/fins 37 are arranged outside the heat-exchange member 30 and the secondary heat-exchange member 40. Adjacent heat-absorption ribs/fins 37 are spaced from each other with gaps formed therebetween. By arranging the spaced heat-absorption ribs 37 outside the heat-exchange member 30 and the secondary heat-exchange member 40, the contact area between the heat-exchange member 30 and the air to be heated is enlarged, and the efficiency of heat-exchange is improved. The heat-absorption ribs 37 outside the heat-exchange member 30 extend into the first cavity 33, such that the heat-absorption ribs 37 are in direct contact with high-temperature gas produced after combustion in the first cavity 33, thus further improving the heat-absorption effect of the heat-exchange member 30. The high-temperature gas produced by combustion of fuel in the combustion portion 221 enters the first cavity 33 for heat-exchange. The heat-absorption ribs 37 extending into the first cavity 33 fully contact with the high-temperature gas by means of their large surface area and absorb heat of the high-temperature gas by heat conduction, the heat is transferred to portions, located outside the heat-exchange member 30, of the heat-absorption ribs 37. The heat-absorption ribs 37 outside the secondary heat-exchange member 40 also absorb heat released in the secondary heat-exchange process by increasing the contact area with the air to be heated, and the heat absorbed by the heat-absorption ribs 37 is transferred to the air to be heated entering from the air inlet 11 and flowing through the space formed between the heat-exchange member 30 and the housing 10 to increase the temperature of the air to be heated, thus realizing effective utilization and transfer of heat and improving the heating effect of the parking heater. The heat-absorption ribs 37 are distributed outside the heat-exchange member 30 and the secondary heat-exchange member 40, such that heat is more uniformly transferred from the high-temperature gas to the air to be heated, improving the heat-exchange efficiency and realizing the same heating effect of the parking heater with less fuel being consumed, thus saving energy. Meanwhile, the full use of heat reduces the emission of harmful gas produced by incomplete combustion, which is benefit to environmental protection and satisfies the energy-saving and environmental protection requirements of heating equipment.

As a further improvement of the disclosure, an ignition device 2211 is arranged outside the combustion portion 221 and includes a heating bar (not shown), and the heating bar extends into the fuel tank 223. By means of the design of the heating bar extending into the fuel tank 223, the ignition device 2211 may directly act on fuel, thus greatly improving the reliability of ignition. When the parking heater starts to work, the ignition device 2211 supplies electric power to the heating bar, and the heating bar generates heat when being electrified. The heat generated by the heating bar is transferred to a combustible mixture of fuel and air in the fuel tank 223 to induce a combustion reaction, continuous and stable combustion is formed in the combustion portion 221, and a large quantity of heat is released to facilitate the subsequent heat-exchange and heat output of the whole parking heater. The heating bar of the ignition device 2211 extends into the fuel tank 223 for ignition, such that the operating safety of the parking heater is improved while the success rate of ignition is increased. Potential safety hazards such as fuel leakage and explosions caused by improper ignition are avoided to ensure that the combustion process is started and performed in a controllable state, thus ensuring a safe and stable state of the whole parking heater in the operating process.

As a further improvement of the disclosure, a mounting plate 13 is arranged on an outer wall of the housing 10, and the mounting plate 13 is fixedly connected to the heat-exchange member 30. The gas inlet 31, the gas outlet 32 and the fuel inlet tube 2231 penetrate through the mounting plate 13 to be exposed outside the housing 10. The mounting plate 13 is mounted on the outer wall of the housing 10 and forms a sealed and integrated structure together with the housing 10. The housing 10 provides an external protection of the whole parking heater, and the mounting plate 13 secures the heat-exchange member 30 to the housing 10 and the gas inlet 31, the gas outlet 32 and the fuel inlet tube 2231 are arranged on the mounting plate 13, such that improved stability of the parking heater and rational installation positions of components are achieved, and the appearance and internal structure of the parking heater are more regular and orderly. The fixed connection between the mounting plate 13 and the heat-exchange member 30 ensures stable installation of the heat-exchange member 30 in the housing 10, which ensures accurate communication of the gas inlet 31 and the gas outlet 32 in the heat-exchange member 30 with the outside to facilitate normal inflow and outflow of air and waste gas, the heat-exchange between the heat-exchange member 30 and the waste gas, and related air-circulation functions, thus ensuring that external air flows in smoothly via the gas inlet 31 to participate in combustion, waste gas produced by combustion is discharged via the gas outlet 32, and fuel is supplied to the fuel tank 223 by means of the fuel inlet tube 2231 for combustion, such that all working processes in the parking heater are performed successively to achieve a heating function.

The technical features of the above embodiments may be combined freely, and for the sake of a brief description, not all possible combinations of the technical features of the above embodiments are described. All combinations of these technical features obtained without conflicts should fall within the scope of the specification.

The above embodiments merely express preferred implementations of the disclosure and are specifically described in detail, but these embodiments should not be construed as limitations of the patent scope of the application. It should be pointed out that for those ordinarily skilled in the art, some transformations ad improvements may be made without departing from the concept of the disclosure, and all these transformations ad improvements should fall within the protection scope of the disclosure. Therefore, the protection scope of the disclosure should be defined by the appended claims.

## Claims

1. A parking heater, **characterized by** comprising:
a housing (10) comprising an air inlet (11) and an air outlet (12);
a combustion chamber (20) arranged in the housing (10), wherein the combustion chamber (20) comprises an open end (21) and a closed end (22), the open end (21) faces the air outlet (12) and comprises a high side and a low side, and a combustion portion is arranged at the closed end (22); and
a heat-exchange member (30), wherein the heat-exchange member (30) is configured as a hollow structure and arranged between the housing (10) and the combustion chamber (20), a gas inlet (31) and a gas outlet (32) are formed in a side wall of the heat-exchange member (30), the gas inlet (31) is in communication with the combustion portion, and the gas outlet (32) is located at a side of the heat-exchange member (30) adjacent to the high side (211) of the open end (21).

2. The parking heater according to claim 1, **characterized in that** the heat-exchange member (30) comprises a first cavity (33) and a second cavity (34), the first cavity (33) is in communication with the gas outlet (32), the second cavity (34) is in communication with the gas inlet (31), a partition (35) is arranged between the first cavity (33) and the second cavity (34), and the partition (35) is disposed around the combustion portion.

3. The parking heater according to claim 2, **characterized in that** the heat-exchange member (30) is call as a primary heat-exchange member (30), and the parking heater further comprises a secondary heat-exchange member (40) which is fixedly connected to the primary heat-exchange member (30);
a heat-exchange groove (41) is arranged at a periphery of a bottom of the secondary heat-exchange member (40), and the heat-exchange groove (41) surrounds a middle portion of the bottom of the secondary heat-exchange member (40);
a heat-exchange channel is formed in the side wall of the heat-exchange member (30) and extends in an axial direction of the housing (10), and the heat-exchange channel comprises a first heat-exchange channel (361) and a second heat-exchange channel (362) adjacent to the first heat-exchange channel (361); and
the first cavity (33) communicates with the heat-exchange groove (41) by means of the first heat-exchange channel (361), and the heat-exchange groove (41) communicates with the gas outlet (32) by means of the second heat-exchange channel (362).

4. The parking heater according to claim 2 or 3, **characterized in that** a first impeller (341) is arranged at a bottom wall of the second cavity (34), and the first impeller (341) comprises a first air suction portion (3411) and a first air discharge portion (3411) in communication with the first air suction portion (3411);
an annular groove (342) is formed in the bottom wall of the second cavity (34) and communicate the gas inlet (31) and the first air suction portion (3411); and
the annular groove (342) is arranged at a side of the bottom wall facing the first air suction portion (3411).

5. The parking heater according to claim 4, **characterized in that** an air tube (222) is disposed around a bottom end of the combustion portion (221), a fuel tank (223) is arranged between the air tube (222) and the combustion portion (221), and a fuel inlet tube (2231) is connected to the fuel tank (223);
the air tube (222) comprises an air inlet end (2221) adjacent to the first air discharge portion (3412) and an air inlet end (2222) extending into an interior of the combustion portion (221); and
a stop plate is arranged at a bottom of the air inlet end (2221), connecting plates are arranged on the stop plate and extend in a radial direction of the air tube (222), and channels (2225) are formed between adjacent connecting plates (2224), and the channels communicate the first air discharge portion (3412) and the air inlet end (2221) of the air tube (222) such that air discharged from the first air discharge portion (3412) of the first impeller is capable of entering the air tube (222) via the channels and the air inlet end (2221).

6. The parking heater according to claim 3, further comprising a motor (50), **characterized in that** the motor (50) is arranged close to the air inlet (11); and
the motor comprises a first output shaft and a second output shaft which are arranged coaxially, and the first output shaft is connected to a first impeller.

7. The parking heater according to claim 6, further comprising a second impeller (53), **characterized in that** the second impeller (53) is connected to the second output shaft; and
the second impeller (53) comprises a second air suction portion and a second air discharge portion in communication with the second air suction portion, and the second air suction portion faces the air inlet.

8. The parking heater according to claim 3, **characterized in that** heat-absorption ribs or fins are arranged outside the primary heat-exchange member (30) and the secondary heat-exchange member (30), and the heat-absorption ribs or fins outside the heat-exchange member (30) extend into the first cavity.

9. The parking heater according to claim 4, **characterized in that** an ignition device is arranged outside the combustion portion, and the ignition device comprises a heating bar which extends into a fuel tank.

10. The parking heater according to claim 2, **characterized in that** a mounting plate is arranged on an outer wall of the housing (10), and the mounting plate is fixedly connected to the heat-exchange member (30); and
the gas inlet (31), the gas outlet (32) and a fuel inlet tube extend through the mounting plate to be exposed outside the housing (10).

11. The parking heater according to any one of claims 1 to 10, **characterized in that** an end surface of the open end (21) is a sloping surface.

12. The parking heater according to claim 5, **characterized in that** the stop plate (2223) faces the first air discharge portion (3412) with a gap formed therebetween to allow the air discharged from the first air discharge portion (3412) to flow to the channels (2225) after passing through the gap.

13. The parking heater according to any one of claims 1 to 12, **characterized in that** the housing (10) has a height direction extending from the air inlet to the air outlet (12); and
the combustion chamber (20) has a height which decreases gradually in a transverse direction away from the gas outlet (32), the transverse direction being perpendicular to the height direction.

14. The parking heater according to any one of claims 1 to 13, **characterized in that** the gas outlet (32) is closer to the air outlet (12) than the gas inlet (31), and the gas inlet (31) is closer to the air inlet than the gas outlet (32).

15. The parking heater according to any one of claims 2 to 14, **characterized in that** the housing (10) further comprises a path formed between an outer surface of the heat-exchange member (30) and an inner surface of the housing (10), the path is in communication with the air inlet and the air out, and the first cavity and the second cavity are isolated from the path.
